# EUROPÄISCHE PATENTANMELDUNG

(11) **EP 3 503 245 A1**
(43) Veröffentlichungstag der Anmeldung: **26.06.2019**
(21) Anmeldenummer: 17208391.7
(22) Anmeldetag: 19.12.2017
(51) Int. Cl.: H01M 2/10, B25F 5/00, H01M 10/052

(54) **AKKUPACK FÜR EINE HANDWERKZEUGMASCHINE**

(71) Anmelder: Hilti Aktiengesellschaft, 9494 Schaan (LI)
(72) Erfinder: Meixner, Ralf, 87656 Germaringen (DE); Stanger, Robert, 87600 Kaufbeuren (DE)
(74) Vertreter: Hilti Aktiengesellschaft Corporate Intellectual Property

(57) **Zusammenfassung**

Akkupack (100) zur wiederlösbaren Aufnahme in Aufnahmebucht (210) einer elektrischen Handwerkzeugmaschine (200), wobei der der Akkupack (100) eine Akkuzelleneinheit (90) aufweist, die innerhalb ein Gehäuses (80) des Akkupacks (100) eingeschlossen ist, wobei das Gehäuse (80) eine der Handwerkzeugmaschine (200) zugewandte Oberschale (10) und eine mit der Oberschale (10) verbundene Unterschale (20) aufweist, wobei die Unterschale (20) zumindest abschnittweise reversibel-elastisch verformbar ausgebildet ist und eine höhere Elastizität als die Oberschale (10) aufweist.

## Beschreibung

Die vorliegende Erfindung betrifft einen Akkupack zur wiederlösbaren Aufnahme in einer Aufnahmebucht einer elektrischen Handwerkzeugmaschine. Der Akkupack weist eine Akkuzelleneinheit auf, die innerhalb eines Gehäuses des Akkupacks eingeschlossen ist. Das Gehäuse weist eine der Handwerkzeugmaschine zugewandte Oberschale und eine mit der Oberschale verbundene Unterschale auf. Die Oberschale und die Unterschale bestehen vorzugsweise überwiegend aus Kunststoff.

Akkupacks der eingangs genannten Art sind grundsätzlich aus dem Stand der Technik bekannt.

Die europäische Patentschrift EP 2 337 111 B1 offenbart einen Batteriepack mit einem Gehäusekörper einem Batteriezellenhalter, der zum Halten einer Mehrzahl von Batteriezellen ausgebildet ist, und mit einer Schockabsorptionsvorrichtung, die zwischen dem Batteriezellenhalter und dem Gehäusekörper angeordnet und dazu ausgebildet ist, den Batteriezellenhalter und die Batteriezellen derart zu unterstützen, dass sie nicht in direktem Kontakt mit dem Gehäusekörper stehen.

Es ist Aufgabe der vorliegenden Erfindung, einen Akkupack bereitzustellen, der auch bei einem vergleichsweise hohen Systemgewicht vergleichsweise sturzfest ausgestaltet ist.

Die Aufgabe wird dadurch gelöst, dass die Unterschale zumindest abschnittsweise reversibel-elastisch verformbar ausgebildet und insbesondere eine höhere Elastizität als die Oberschale aufweist.

Die Erfindung schließt die Erkenntnis ein, dass Akkupacks für elektrische Handwerkzeugmaschinen typischerweise über wenigstens zwei Gehäuseteile (Oberschale, Unterschale), sowie eine Akkuzelleneinheit (Corepack) verfügen. Die Akkuzelleneinheit wird dabei typischerweise formschlüssig zwischen der oberen und unteren Gehäuseschale eingeklemmt.

Es wurde weiterhin erkannt, dass bei Akkupacks des Standes der Technik zwischen Gehäuse und Corepack praktisch kein Freiraum vorhanden ist. Dadurch wird bei einem Sturz auf die hintere Kante des Akkupacks (der Arbeitsseite der Handwerkzeugmaschine abgewandte Seite) bereits bei einer geringen Gehäuseverformung die auftretende Schlagenergie direkt auf die Akkuzelleneinheit geleitet wird. Dies kann zu einer Beschädigung der Akkuzellen der Akkuzelleneinheit fürhen. Die Erfindung schließt ebenfalls die Erkenntnis ein, dass die typischerweise steife Konstruktion der Gehäuseteile die auftretenden Sturzenergien nicht aufnehmen kann, was häufig in einem Bruch des Gehäuses resultiert.

Dadurch, dass erfindungsgemäß die Unterschale zumindest abschnittsweise reversibel-elastisch verformbar ausgebildet ist und vorzugsweise eine höhere Elastizität als die Oberschale aufweist, werden diese Nachteile weitestgehend vermieden.

Es hat sich als vorteilhaft herausgestellt, wenn die Unterschale einteilig ausgebildet ist und vorzugsweise ausschließlich aus einem reversibel-elastisch verformbaren Kunststoff besteht. Die Unterschale kann aus einem elastomerisch eingestellten Polyurethan bestehen oder ein solches aufweisen. Die Oberschale und die Unterschale bestehen vorzugsweise überwiegend aus Kunststoff.

Es hat sich als vorteilhaft herausgestellt, wenn die Akkuzelleneinheit an zumindest vier Seiten von der Unterschale umschlossen ist.

In einer besonders bevorzugten Ausgestaltung ist zwischen der Unterschale und der Akkuzelleneinheit in zumindest zwei zueinander orthogonalen Richtungen jeweils ein Spalt ausgebildet, der vorzugsweise wenigstens 5 mm beträgt. Besonders bevorzugt ist wenigstens einer der Spalte auf einer der Arbeitsseite der Handwerkzeugmaschine abgewandten Seite der Unterschale befindlich.

Es hat sich als vorteilhaft herausgestellt, wenn die Akkuzelleneinheit einen Oberrahmen und einen Unterrahmen aufweist, in dem die Mehrzahl von Akkuzellen der Akkuzelleneinheit jeweils eingesteckt sind.

In einer weiteren bevorzugten Ausgestaltung ist der Oberrahmen mittels einer Steckverbindung an der Oberschale befestigt. Ein Einsteckende der Oberschale besteht vorzugsweise aus einem elastischen Material oder weist ein solches auf. Das elastische Material kann ein Kunststoff sein, beispielsweise ein Elastomer oder ein elastomerisch eingestelltes Polyurethan.

Es hat sich als vorteilhaft herausgestellt, wenn die Akkuzelleneinheit mit dem Oberrahmen lediglich über das oder die Einsteckenden verbunden ist. Dadurch, dass die Akkuzelleneinheit mit dem Oberrahmen lediglich über elastische Einsteckenden mit der Oberschale verbunden ist, wird im Falle eines Sturzes keine Energie an die Akku-Zellen weitergegeben. Im Falle eines Sturzes der Handwerkzeugmaschine mit aufgenommenem Akkupack, steht durch die reversibel-elastisch ausgestaltete Unterschale ein gewisser Verformungsweg des Gehäuses zur Verfügung, d.h. die Unterschale kann sich reversibel-elastisch verformen, ohne dass sie in Kontakt mit der Akkuzelleneinheit kommt. Dadurch wird eine Beschädigung der Akkuzelleneinheit sowie der einzelnen Akkuzellen verhindert.

In einer weiteren bevorzugten Ausgestaltung weisen der Oberrahmen und der Unterrahmen jeweilige Stützstreben auf, die vorzugsweise lediglich gegeneinander anliegen. Mit anderen Worten sind die Stützstreben nicht miteinander fest verbunden. Diese "losen Verbindungen" können dabei helfen, die Sturzenergie über das Auseinanderfallen des Oberrahmens und des Unterrahmens abzubauen. Ein Energieeintrag in die Akkuschnittstelle im Bereich der Aufnahmebucht der Handwerkzeugmaschine sowie in die Handwerkzeugmaschine selbst hinein ist somit vergleichsweise gering.

Es hat sich als vorteilhaft herausgestellt, wenn die Akkuzelleneinheit eine Mehrzahl vorzugsweise zylinderförmiger Lithium-Akkuzellen aufweist.

Die Oberschale und die Unterschale können miteinander über wenigstens eine Schraubverbindung verschraubt sein.

Die Erfindung wird ebenfalls gelöst durch ein System aus einer elektrischen Handwerkzeugmaschine und einem Akkupack der vorstehend beschriebenen Art.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: ein bevorzugtes Ausführungsbeispiel eines erfindungsgemäßen Akkupacks;
- Fig. 2: das Ausführungsbeispiel der Fig. 1 in Schnittdarstellung;
- Fig. 3: eine Rahmenstruktur einer Akkuzelleneinheit (Corepack);
- Fig. 4: einen Schnitt durch die Unterschale des Akkupacks der Fig. 1;
- Fig. 5: einen Schnitt durch die Oberschale des Akkupacks der Fig. 1, wobei die Unterschale nicht dargestellt ist; und
- Fig. 6: ein Schnitt durch die Rahmenstruktur der Akkuzelleneinheit ohne Akkuzellen.

### Ausführungsbeispiele:

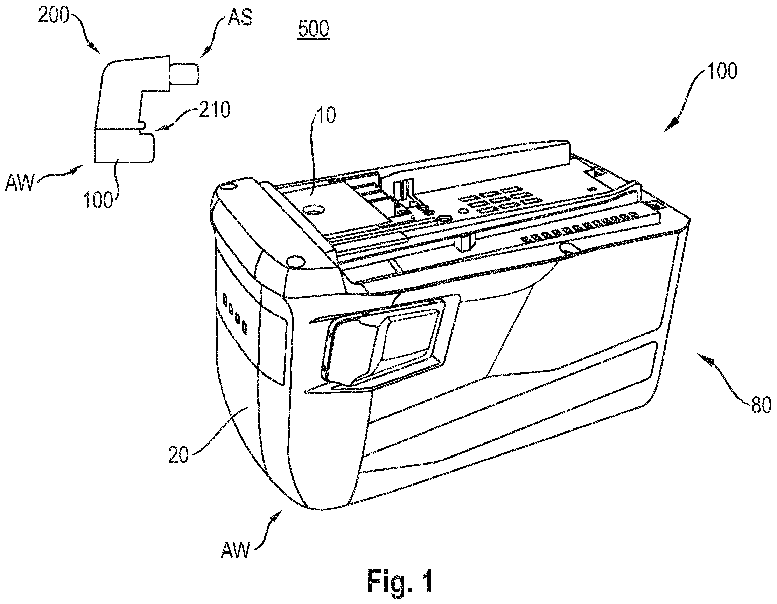

Fig. 1 zeigt einen erfindungsgemäßen Akkupack 100 zur wiederlösbaren Aufnahme in einer Aufnahmebucht 210 einer elektrischen Handwerkzeugmaschine 200. Akkupack 100 und Handwerkzeugmaschine 200 definieren ein System 500.

Die elektrische Handwerkzeugmaschine 200 ist oben links in Fig. 1 in schematischer Weise dargestellt. Die Handwerkzeugmaschine 200 weist eine Arbeitsseite AS auf, beispielsweise ein Spannfutter. Eine der Handwerkzeugmaschine abgewandte Seite AW des Akkupacks 100 ist links unten am Akkupack 100 dargestellt. Dies ist typischerweise die Seite, auf die ein Akkupack 100 in der Praxis am häufigsten fällt.

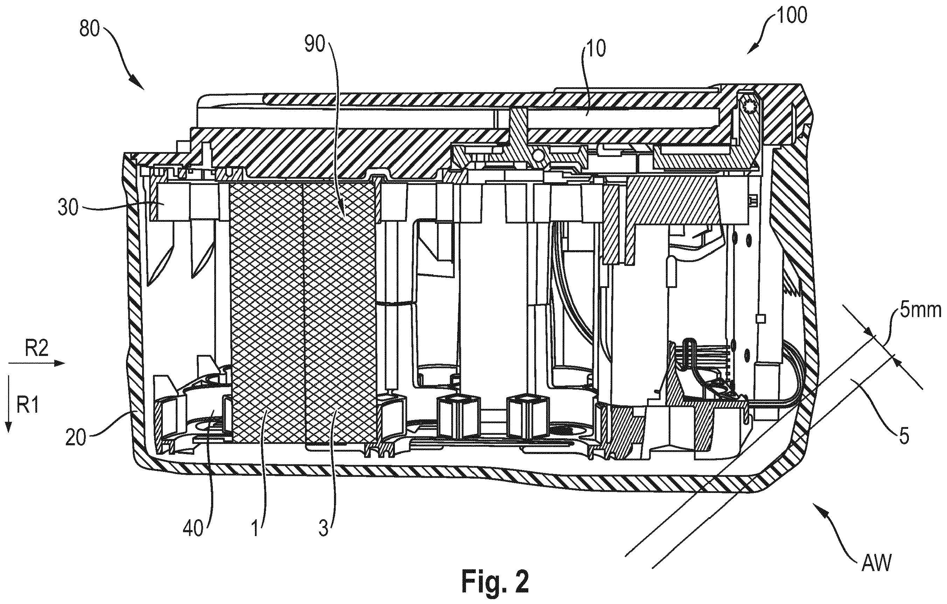

Der Akkupack 100 weist eine Akkuzelleneinheit 90 auf (vgl. Fig. 2), die hier nicht sichtbar innerhalb eines Gehäuses 80 des Akkupacks 100 eingeschlossen ist.

Das Gehäuse 80 weist eine der Handwerkzeugmaschine 200 (im bestimmungsgemäßen aufgenommenen Betrieb) zugewandte Oberschale 10 und eine mit der Oberschale 10 verbundene Unterschale 20 auf. Die Oberschale 10 und die Unterschale 20 bestehen vorzugsweise überwiegend aus Kunststoff.

Erfindungsgemäß ist die Unterschale 20 zumindest abschnittsweise reversibel-elastisch verformbar ausgebildet und weist eine höhere Elastizität als die Oberschale 10 auf. Die Unterschale 20 kann zumindest auf der der Arbeitsseite AS der Handwerkzeugmaschine abgewandten Seite AW reversibel-elastisch verformbar ausgebildet sein.

Im vorliegend dargestellten Ausführungsbeispiel ist die Unterschale 20 einteilig ausgebildet. Dabei besteht die Unterschale 20 ausschließlich aus einem reversibel-elastisch verformbaren Kunststoff, vorliegend einem elastomerisch eingestellten Polyurethan.

Fig. 2 zeigt eine Schnittdarstellung durch den Akkupack 100 der Fig. 1. Gut zu erkennen ist der die zentrale Akkuzelleneinheit 90, die innerhalb des Gehäuses 80 des Akkupacks 100 eingeschlossen ist. Die Akkuzelleneinheit 90 ist aufgebaut durch eine Mehrzahl von Akkuzellen 1, 3, die im vorliegend dargestellten Ausführungsbeispiel als zylinderförmige Lithium-Ionen-Akkuzellen ausgebildet sind.

Ebenfalls gut zu erkennen in Fig. 2 ist, dass die Akkuzelleneinheit 90 an zumindest vier Seiten (vorne, hinten, links, rechts) von der Unterschale 20 umschlossen ist. Des Weiteren ist die Akkuzelleneinheit 90 an einer fünften Seite von der Unterschale 20 umschlossen, in der Darstellung der Fig. 2 nämlich von der Unterseite der Unterschale 20.

Zwischen der Unterschale 20 und der Akkuzelleneinheit 90 sind in den zueinander orthogonalen Richtungen R1 und R2 jeweils Spalte ausgebildet, die jeweils vorzugsweise wenigstens 5 mm aufweisen. Eingezeichnet ist insbesondere ein Spalt 5 auf einer der Arbeitsseite AS (vgl. Fig. 1) der Handwerkzeugmaschine abgewandten Seite AW der Unterschale 20. Auf dieser abgewandten Seite AW der Unterschale 20 weist typischerweise die höchste Sturzgefährdung auf. Fällt nun der Akkupack 100 auf die abgewandte Seite AW, so kann aufgrund des Spalts 5 eine reversibel-elastische Verformung der Unterschale 20 nicht bzw. kaum zu einem Kontakt zwischen Unterschale 20 und der Akkuzelleneinheit 90 führen.

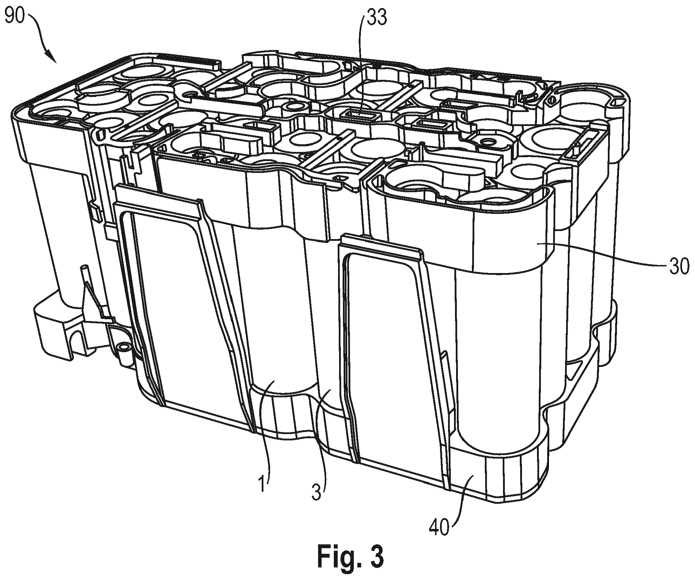

In Fig. 2 bereits angedeutet ist ein Oberrahmen 30 und ein Unterrahmen 40 der Akkuzelleneinheit, wobei jeweils eine Mehrzahl der Akkuzellen 1, 3 in den Oberrahmen 30 und den Unterrahmen 40 eingesteckt sind. Die Mehrzahl der Akkuzellen 1, 3 sind zwischen Oberrahmen 30 und Unterrahmen 40 fixiert, was insbesondere aus der Fig. 3 sehr gut ersichtlich ist.

Fig. 3 zeigt nun die Akkuzelleneinheit 90 mit Oberrahmen 30 und Unterrahmen 40, in die jeweils die Mehrzahl von Akkuzellen 1, 3 der Akkuzelleneinheit 90 eingesteckt sind. Gut zu erkennen in Fig. 3 ist die wabenförmige Struktur des Oberrahmens 30, eine entsprechende wabenförmige Struktur ist im Unterrahmen 40 ausgebildet (hier nicht erkennbar).

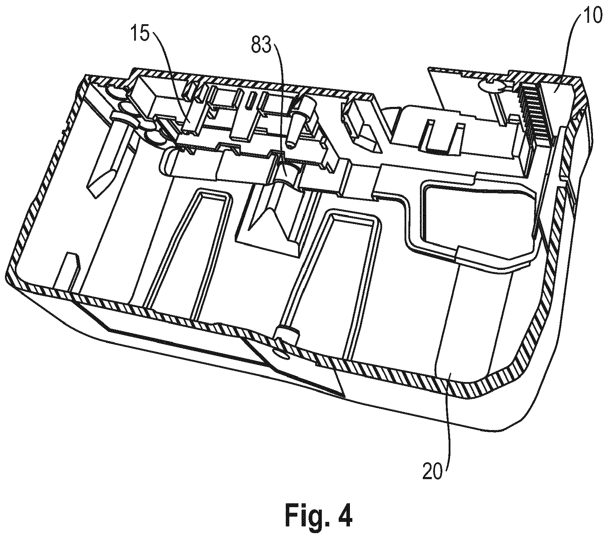

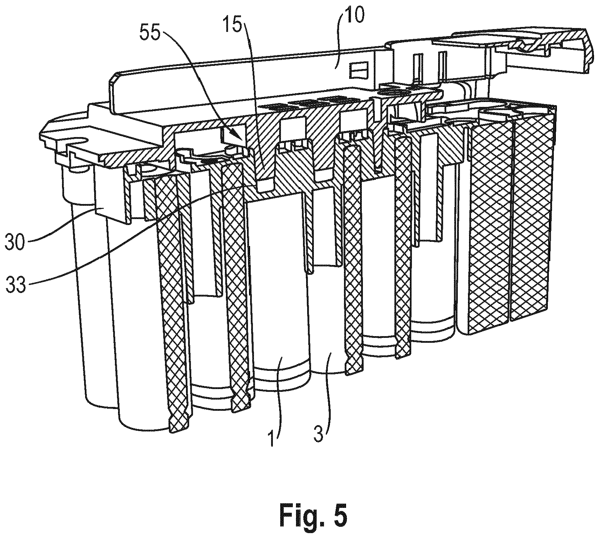

Auf der Oberseite des Oberrahmens 30 erkennbar ist eine Steckaufnahme 33, über welche eine Befestigung des Oberrahmens 30 an der Oberschale 10 erfolgt. Dazu ist in der Oberschale 10, dies wird aus Fig. 4 ersichtlich, eine Anzahl von Einsteckenden vorgesehen, die zum Eingriff in die korrespondierende Steckaufnahme 33 (vgl. Fig. 3) ausgebildet ist. Das Einsteckende 15 bildet zusammen mit der Steckaufnahme 33 eine Steckverbindung 55 (vgl. Fig. 5). Dabei ist das Einsteckende 15 der Oberschale 10 vorzugsweise aus einem elastischen Material gefertigt, sodass im Falle eines Sturzes des Akkupacks 100 keine Energie vom Gehäuse auf die Akkuzellen weitergegeben wird.

Zurück nun zu Fig. 4, die einen Schnitt durch die Oberschale 10 und die Unterschale 20 des Akkupacks 100 (vgl. Fig. 1) zeigt. Wie der Fig. 4 entnommen werden kann, sind die Oberschale 10 und die Unterschale 20 zusammengefügt über eine Schraubverbindung 85 (hier innerhalb eines Schraubdoms) miteinander verschraubt. Der Oberschale 10 zugehörig sind die bereits beschriebenen Einsteckenden 15, die zur Befestigung des Oberrahmens (vgl. Fig. 5) mit der Oberschale 10 vorgesehen sind.

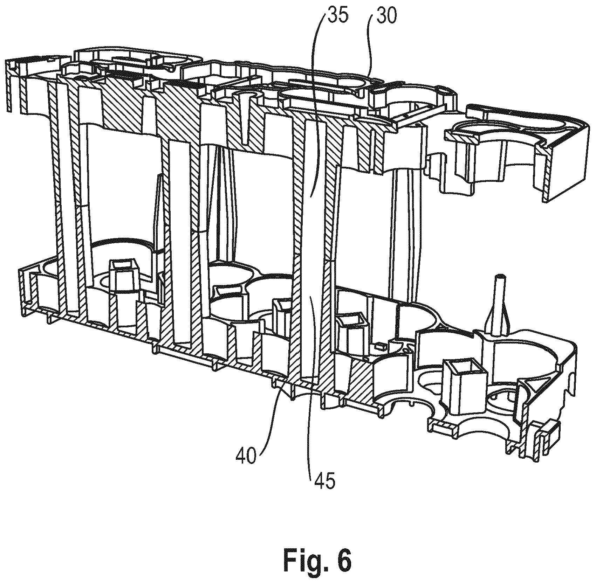

Mit Bezug auf Fig. 6 soll nunmehr eine weitere konstruktive Besonderheit des Oberrahmens 30 und des Unterrahmens 40 beschrieben werden. Der Oberrahmen 30 und der Unterrahmen 40 weisen jeweilige Stützstreben 35, 40 auf, die im vorliegend dargestellten Ausführungsbeispiel lediglich gegeneinander anliegen. Durch dieses "lose Anliegen" sowie die Tatsache, dass die Akkuzellen (vgl. beispielsweise Fig. 3) lediglich lose in den Oberrahmen 30 und den Unterrahmen 40 eingesteckt sind, wird im Falle eines Sturzes des Akkupacks 100 kann ein nicht unwesentlicher Teil der Sturzenergie über das Auseinanderfallen des Oberrahmens 30 und des Unterrahmens 40 abgebaut werden.

### Bezugszeichenliste

- 1: Akkuzellen
- 3: Akkuzellen
- 5: Spalt
- 10: Oberschale
- 15: Einsteckende
- 20: Unterschale
- 30: Oberrahmen
- 33: Steckaufnahme
- 35: Stützstrebe des Oberrahmens
- 40: Unterrahmen
- 45: Stützstrebe des Unterrahmens
- 55: Steckverbindung
- 80: Gehäuse
- 85: Schraubverbindung
- 90: Akkuzelleneinheit (Corepack)
- 100: Akkupack
- 200: Handwerkzeugmaschine
- 210: Aufnahmebucht

- AS: Arbeitsseite
- AW: abgewandte Seite
- R1: erste Richtung
- R2: zweite Richtung

## Patentansprüche

1. Akkupack (100) zur wiederlösbaren Aufnahme in einer Aufnahmebucht (210) einer elektrischen Handwerkzeugmaschine (200), wobei der Akkupack (100) eine Akkuzelleneinheit (90) aufweist, die innerhalb ein Gehäuses (80) des Akkupacks (100) eingeschlossen ist, wobei das Gehäuse (80) eine der Handwerkzeugmaschine (200) zugewandte Oberschale (10) und eine mit der Oberschale (10) verbundene Unterschale (20) aufweist,
**dadurch gekennzeichnet, dass** die Unterschale (20) zumindest abschnittweise reversibel-elastisch verformbar ausgebildet ist und insbesondere eine höhere Elastizität als die Oberschale (10) aufweist.

2. Akkupack (100) nach Anspruch 1,
**dadurch gekennzeichnet, dass** die Unterschale (20) einteilig ausgebildet ist und vorzugsweise ausschließlich aus einem reversibel-elastisch verformbaren Kunststoff besteht.

3. Akkupack (100) nach Anspruch 1 oder 2,
**dadurch gekennzeichnet, dass** die Akkuzelleneinheit (90) an zumindest vier Seiten von der Unterschale (20) umschlossen ist.

4. Akkupack (100) nach einem der vorangehenden Ansprüche,
**dadurch gekennzeichnet, dass** zwischen der Unterschale (20) und der Akkuzelleneinheit (20) in vorzugsweise zumindest zwei zueinander orthogonalen Richtungen (R1, R2) jeweils ein Spalt ausgebildet ist, der jeweils vorzugsweise wenigsten 5 Millimeter aufweist.

5. Akkupack (100) nach einem der vorangehenden Ansprüche,
**dadurch gekennzeichnet, dass** wenigstens ein oder einer der Spalte (5) auf einer der Arbeitsseite (AS) der Handwerkzeugmaschine abgewandten Seite (AW) der Unterschale (20) befindlich ist.

6. Akkupack (100) nach einem der vorangehenden Ansprüche,
**dadurch gekennzeichnet, dass** die Akkuzelleneinheit (90) einen Oberrahmen (30) und einen Unterrahmen (40) aufweist in die jeweils eine Mehrzahl von Akkuzellen (1, 3) der Akkuzelleneinheit (90) eingesteckt sind.

7. Akkupack (100) nach Anspruch 6,
**dadurch gekennzeichnet, dass** der Oberrahmen (30) mittels einer Steckverbindung (55) an der Oberschale (10) befestigt ist, wobei ein Einsteckende (15) der Oberschale (10) vorzugsweise aus einem elastischen Material besteht oder ein solches aufweist.

8. Akkupack (100) nach Anspruch 7,
**dadurch gekennzeichnet, dass** die Akkuzelleneinheit (90) mit dem Oberrahmen (30) lediglich über das oder die Einsteckenden verbunden ist.

9. Akkupack (100) nach einem der Ansprüche 6 bis 8,
**dadurch gekennzeichnet, dass** der Oberrahmen (30) und der Unterrahmen (40) jeweilige Stützstreben (35, 45) aufweisen, die vorzugsweise lediglich gegeneinander anliegen.

10. Akkupack (100) nach einem der vorangehenden Ansprüche,
**dadurch gekennzeichnet, dass** die Akkuzelleneinheit (90) eine Mehrzahl vorzugsweise zylinderförmiger Li-Akkuzellen aufweist.

11. Akkupack (100) nach einem der vorangehenden Ansprüche,
**dadurch gekennzeichnet, dass** die Oberschale (10) und die Unterschale (20) miteinander über eine Schraubverbindung (85) verschraubt sind.

12. System (500) aus einer elektrischen Handwerkzeugmaschine (200) und einem Akkupack (100) nach einem der vorangehenden Ansprüche.
